Europäisches Patentamt

European Patent Office

Office européen des brevets

(11) Publication number: **0 204 357**
A1

# EUROPEAN PATENT APPLICATION

(21) Application number: 86200769.7

(22) Date of filing: 02.05.86

(51) Int. Cl.4: **C08L 55/02** , C08L 51/04 , C08L 25/12 , C08L 25/16 , C08L 35/06

(30) Priority: 03.05.85 NL 8501254

(43) Date of publication of application:
10.12.86 Bulletin 86/50

(84) Designated Contracting States:
AT BE CH DE FR GB IT LI NL SE

(71) Applicant: STAMICARBON B.V.
Mijnweg 1
NL-6167 AC Geleen(NL)

(72) Inventor: Roerdink, Eize
Laathofstraat 15
NL-6191 GD Beek(L)(NL)
Inventor: Bruls, Wilhelmus Gerardus Marie
Graaf Wolter Hoenstraat 32
NL-6243 BE Geulle(NL)
Inventor: van Asperen, Pieter Jan
Op de Windhaspel 9
NL-6191 LC Beek(L)(NL)

(74) Representative: Hoogstraten, Willem Cornelis
Roeland et al
OCTROOIBUREAU DSM Postbus 9
NL-6160 MA Geleen(NL)

(54) Polymer composition.

(57) The invention relates to a polymer composition on the basis of a graft copolymer and a copolymer of styrene and maleic anhydride, comprising:

10-88 parts by weight of a graft copolymer of a vinyl aromatic compound and acrylonitrile on a butadiene rubber

10-60 parts by weight of a copolymer of α-methylstyrene and acrylonitrile, and

2-30 parts by weight of a copolymer of styrene and maleic anhydride with a maleic anhydride content of 20-32 wt.%, the styrene-maleic anhydride content being lower than the α-methylstyrene-acrylonitrile copolymer content of the polymer composition.

These polymer compositions have an improved resistance to deformation at elevated temperature in combination with good processability and good impact resistance.

# POLYMER COMPOSITION

The invention relates to a polymer composition on the basis of a graft copolymer and a copolymer of styrene and maleic anhydride.

In many plastics applications where a good combination of impact resistance, processability, surface properties and resistance to deformation at higher temperatures is of the essence, use is made of a graft copolymer of a vinyl aromatic compound and acrylonitrile on a butadiene rubber (ABS). ABS is applied, for instance, for the manufacture of housings of all kinds of electrical equipment, but also for the manufacture of certain auto parts.

For some applications, however, there may be a problem in that the graft copolymer of styrene and acrylonitrile on a butadiene rubber, optionally mixed with a styrene-acrylontril copolymer, is not sufficiently resistant to deformation at the temperatures at which it is applied.

Certain household and/or electrical appliances must be resistant to higher temperatures than those which ABS itself can resist. A solution to this problem has been found in the form of replacement of all or part of the styrene by α-methylstyrene. This can be done both in the graft copolymer and in the copolymer with acrylonitrile, or in both. Polymer compositions based on such a replacement are extensively described in the prior art literature, e.g. in US 4,404,323.

Full replacement of styrene by α-methylstyrene, both in the graft copolymer and in the copolymer with acrylonitrile, is, however, not feasible. In the first place this has a strongly negative effect on the processability of the end product, but besides that there also are problems with respect to the preparation of the graft copolymer. The reactivity of α-methylstyrene is considerably lower, so that full replacement of styrene by α-methylstyrene may give rise to a substantial capacity decrease during polymerization of the graft copolymer or copolymer. In practice this means that there are limits to replacement of styrene by α-methylstyrene. All this, however, in its turn has as a consequence that there are limits to improvement of the dimensional stability under heat (Vicat, HDT) of the polymer composition. Even at the upper limit, the dimensional stability under heat of the polymer composition still is insufficient for a number of applications.

The object of the invention is to provide a polymer composition having a resistance to deformation at elevated temperature that is improved compared with that of the known polymer compositions on the basis of α-methylstyrene, without the productivity and/or dimensional stability under heat of the polymer composition being sacrificed.

The polymer composition according to the invention is characterized in that it comprises:

10-88 parts by weight of a graft copolymer of a vinyl aromatic compound and acrylonitrile on a butadiene rubber.

10-60 parts by weight of a copolymer of α-methylstyrene and acrylonitrile, and

2-30 parts by weight of a copolymer of styrene and maleic anhydride with a maleic anhydride content of 20-32 wt.%, the styrene-maleic anhydride content being lower than the α-methylstyrene-acrylonitrile copolymer content of the polymer composition.

Surprisingly, it has been found that application of the combination of at least these three components in the polymer composition yields a good dimensional stability under heat in combination with good processability and good impact resistance. Moreover, it is found that the problems to be expected with respect to demixing, poor processability and low impact strength are not encountered on limited replacement of the copolymer of α-methylstyrene and acrylonitrile by the styrene-maleic anhydride copolymer.

In this context it is noted that US patent 3,642,949 discloses mixing of copolymers of styrene and maleic anhydride with ABS. Optionally, a small amount of copolymer may be added to the mixture obtained. From a list of products to be applied, it can be deduced that the copolymer of α-methylstyrene and acrylonitrile is also among these.

There is advantage in having the polymer composition according to the invention comprise 35-49 parts by weight of graft copolymer, 35-49 parts by weight of α-methylstyrene-acrylonitrile copolymer and 2-30 parts by weight of styrene-maleic anhydride copolymer. With this combination of components, an optimum balance between impact strength and dimensional stability under heat is obtained.

An added advantage of the polymer composition according to the invention is that the overall production rate increases on account of the average polymerization time of the various components, which implies that a higher plant output is achieved.

The graft copolymer applied in the polymer composition according to the invention consists of a graft copolymer of styrene and/or α-methylstyrene on a butadiene rubber, which graft copolymer is known per se. The rubber is preferably chosen from the group made up of polybutadiene, butadiene styrene rubber, butadiene acrylate rubber, butadiene acrylonitrile rubber and mixtures of two or more of these rubbers with one or more other rubbers.

When use is made of mixtures of a butadiene rubber with one or more other rubbers, the butadiene rubber content must at least be 50 % of the mixture.

The graft copolymer can be prepared in the customary manner, e.g. by mass, solution or suspension polymerization. It is also possible to combine two or more of these polymerization methods to, e.g., mass solution polymerization, mass suspension polymerization or emulsion suspension polymerization. Polymerization is preferably effected in the presence of the customary substances, such as free radical donors, optionally in combination with a redox system, chain length regulators, stabilizers, suspending agents, emulsifiers, and the like.

It is also possible to apply more than one graft copolymer in the polymer composition according to the invention. In particular, there may be advantage in application of two graft copolymers, which differ in their preparation method, for instance a graft copolymer prepared by mass polymerization and a graft copolymer prepared by emulsion polymerization. It may also be advantageous to apply two graft copolymers having a different rubber content, for instance a graft copolymer with a rubber content between 20 and 50 wt.% on the one hand and a second graft copolymer, with a rubber content that is at least 5 wt.% higher, on the other.

The total rubber content of the graft copolymer component of the polymer composition preferably is between 20 and 80 wt.%, more in particular between 20 and 50 wt.%, since optimum results as regards impact strength are obtained within these limits. The rubber content of the total polymer composition preferably is between 10 and 35 wt.%.

The copolymer of α-methylstyrene and acrylonitrile can be prepared in a customary manner, for instance by emulsion polymerization, solution polymerization, mass polymerization or suspension polymerization. It is preferred not to apply suspension polymerization, since this gives rise to either very long polymerization times or very complicated recipes. The copolymer of α-methylstyrene and acrylonitrile may optionally contain a small amount of styrene, preferably not more than 5-10 wt.%. In certain cases, the presence of styrene, though having an adverse effect on the dimensional stability under heat, may have a positive effect on the compatibility of the various components in the polymer composition. The copolymer of α-methylstyrene and acrylonitrile therefore generally contains 50-80 parts by weight of α-methylstyrene, 20-40 parts by weight of acrylonitrile and 0-10 parts by weight of styrene.

The copolymer of styrene and maleic anhydride to be applied according to the invention has a maleic anhydride content of 20-32 wt.%. The upper limit of 32 wt.% is determined by the processability of the copolymer in the polymer composition, while the advantages of the polymer composition according to the invention are absent or all but absent at a maleic anhydride content below 20 wt.%. The copolymer of styrene and maleic anhydride can be prepared in the customary for the preparation of a statistical, non-alternating copolymer of styrene and maleic anhydride. A possible process is described in Hanson and Zimmerman, Ind. Chem. Eng. Vol. 49., No. 11, November 1957, pp. 1803 through 1807. However polymerization is effected, it is essential that it is done with proper stirring, since otherwise an alternating copolymer of styrene and MA is obtained, possibly in combination with a styrene homopolymer.

The copolymer of styrene and maleic anhydride may contain 0.1-5 wt.% other monomers such as acrylonitrile or methylmethacrylate. This, however, is not necessary.

The polymer composition according to the invention may optionally also contain a minor amount, e.g. up to 20 wt.%, of a copolymer of styrene and acrylonitrile. In addition, the polymer composition according to the invention contains the customary additives, in an amount of at most 10 wt.%, which additives include colourants, pigments, stabilizers, lubricants, fillers, mould release agents, plasticizers, antioxidants, etc.

The polymer composition can be prepared by mixing in the melt of the various components. To this end, known batch or continuous mixers, such as a Banbury mixer, or a single or double screw extruder can be applied. It is, however, also possible to mix two or more of the components of the polymer composition in the liquid phase directly upon their leaving the reactor, which mixing process can optionally be carried out in the presence of a solvent. This yields a melt or solution of the polymer mixture, which can then be processed to solid material in the customary manner. By preference this is done by granulation of the melt, optionally after solvent removal.

The polymer composition according to the invention is highly suitable for the preparation of various objects, such as tubes, bottles, furniture, car dashboards, cabinets and housings for electronic and domestic appliances, shoe heels, caravans, skis and surf boards.

The invention will now be elucidated on the basis of the following examples, without being restricted hereto.

Comparative examples 1-5 and Examples I and II

On the basis of a graft copolymer of styrene and acrylonitrile on polybutadiene, a copolymer of α-methylstyrene and acrylonitrile in a weight ratio of 70 : 30 and a copolymer of styrene and maleic anhydride with different maleic anhydride contents, a series of polymer compositions was prepared, use being made of the same, customary additives for each of the polymer compositions.

The results are presented in the following table.

## T A B L E

| Ex. | ABS | α-Me SAN | SMA | %MA[1] | Mw SMA (x $10^3$) | % rubber[2] | Vicat[3] | Notched |
|-----|-----|----------|-----|--------|-------------------|-------------|----------|---------|
| | p.by wt. | p.by wt. | p.by wt. | | | | °C | Izod |
| 1[x] | 39.4 | 30.6 | 30 | 14 | 223 | 15 | 109 | 12.6 |
| 2[x] | 44.7 | 25.3 | 30 | 13 | 223 | 17 | 107 | 16.4 |
| 3[x] | 39.5 | 10.5 | 50 | 14 | 223 | 15 | 110 | 8.2 |
| I | 40 | 30 | 30 | 27.5 | 150 | 15.2 | 116 | 14.2 |
| 4[x] | 40 | 60 | - | - | - | 15.2 | 106 | 19.3 |
| II | 50 | 25 | 25 | 27.5 | 150 | 19 | 110 | 26.8 |
| 5[x] | 50 | 50 | - | - | - | 19 | 99 | 28.1 |

[x]  not according to the invention

[1]  in SMA

[2]  in polymer compositions

[3]  untempered

As is apparent from comparison of Examples 1-3 and Examples 4-5, use of a styrene-maleic anhydride copolymer with a maleic anhydride content of less than 20 wt.% does not yield any substantial improvement of the combination of dimensional stability under heat and impact resistance, whereas use of a copolymer of styrene and maleic anhydride with a high maleic anhydride content does (see Examples I + II).

**Claims**

1. Polymer composition on the basis of a graft copolymer and a copolymer of styrene and maleic anhydride, comprising:

10-88 parts by weight of a graft copolymer of a vinyl aromatic compound and acrylonitrile on a butadiene rubber

10-60 parts by weight of a copolymer of α-methylstyrene and acrylonitrile, and

2-30 parts by weight of a copolymer of styrene and maleic anhydride with a maleic anhydride content of 20-32 wt.%, the styrene-maleic anhydride content being lower than the α-methylstyrene-acrylonitrile copolymer content of the polymer composition.

2. Polymer composition according to claim 1, characterized in that it comprises

35-49 parts by weight of graft copolymer,

35-49 parts by weight of α-methylstyrene-acrylonitrile copolymer,

2-30 parts by weight of styrene-maleic anhydride copolymer.

3. Polymer composition according to either claims 1 or 2, characterized in that the rubber in the graft copolymer is chosen from the group consisting of polybutadiene, butadiene-styrene rubber, butadiene-acrylate rubber, butadiene-acrylonitrile rubber, mixtures of two or more of these rubbers, and mixtures of one or more of these rubbers with one or more of other rubbers.

4. Polymer composition according to claims 1-3, characterized in that the rubber content of the graft copolymer is between 20 and 80 wt.%, more in particular between 20 and 50 wt.%.

5. Polymer composition according to claims 1-4, characterized in that the rubber content of the polymer composition is between 10 and 35 wt.%.

6. Polymer composition as substantially described and elucidated on the basis of the examples.

7. Object made wholly or partly of a polymer composition according to claims 1-6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 137 295 (BASF) <br> * Claims * <br><br> ----- | 1-7 | C 08 L 55/02 <br> C 08 L 51/04 <br> C 08 L 25/12 <br> C 08 L 25/16 <br> C 08 L 35/06 |

TECHNICAL FIELDS SEARCHED (Int. Cl. 4)

C 08 L

The present search report has been drawn up for all claims

| Place of search | Date of completion of the search | Examiner |
|---|---|---|
| THE HAGUE | 07-08-1986 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82